# EUROPÄISCHE PATENTSCHRIFT

(11) **EP 4 277 837 B1**
(45) Veröffentlichungstag und Bekanntmachung des Hinweises auf die Patenterteilung: **18.11.2026**
(21) Anmeldenummer: 21844304.2
(22) Anmeldetag: 22.12.2021
(51) Int. Cl.: B62M 6/00, B62M 6/40, F16B 39/282, B62M 6/55

(54) **ANTRIEBSANORDNUNG**
DRIVE ASSEMBLY
ENSEMBLE D'ENTRAÎNEMENT

(30) Priorität: 14.01.2021 DE 102021200307
(43) Veröffentlichungstag der Anmeldung: 22.11.2023
(73) Patentinhaber: Robert Bosch GmbH, 70442 Stuttgart (DE)
(72) Erfinder: NGUYEN, Quoc-Dat, 72654 Neckartenzlingen (DE); BOOS, Paul, 72131 Ofterdingen (DE); HOLST, Stefan, 72760 Reutlingen (DE); BINDER, Julian, 72827 Wannweil (DE)
(86) Internationale Anmeldenummer: PCT/EP2021/087266
(87) Internationale Veröffentlichungsnummer: WO 2022/152535

(56) Entgegenhaltungen:
- DE-A1- 102016 112 778
- DE-A1- 102019 204 823
- JP-U- S55 151 919
- US-A- 4 283 091
- -: "Tm dresselhaus 2016", 20 July 2016 (2016-07-20), pages 31 - 31, XP055904865, Retrieved from the Internet <URL:https://issuu.com/technomag-ch/docs/tm_dresselhaus_2016_low> [retrieved on 20220325]

## Beschreibung

### Stand der Technik

Die vorliegende Erfindung betrifft eine Antriebsanordnung, ein die Antriebsanordnung umfassendes Fahrzeug, und ein Verfahren zur Montage einer Antriebsanordnung eines Fahrzeugs.

Bekannt sind Antriebsanordnungen von Fahrzeugen, wie beispielsweise Elektrofahrrädern, wobei eine Antriebseinheit zur Befestigung über Haltebleche an einem Fahrzeugrahmen eines Fahrzeugs verschraubt wird. Um eine genaue Anordnung der Antriebseinheit relativ zum Fahrzeugrahmen zu erhalten, erfolgt eine Positionierung häufig mittels einer speziellen Lehre bei der erstmaligen Verschraubung. Ist es zu einem späteren Zeitpunkt erforderlich, die Antriebseinheit vom Fahrzeugrahmen zu demontieren, beispielsweise aufgrund von Wartungszwecken oder Reparaturen, so ist bei einer erneuten Montage ein nochmaliges Ausrichten mittels der speziellen Lehre erforderlich, um wieder die genaue relative Anordnung zu erhalten. Analog kann für eine präzise Montage von Halteblechen und Antriebseinheit relativ zueinander eine spezielle Lehre notwendig sein.

Dokument DE102016112778A1 zeigt die Präambel des Anspruchs 1.

### Offenbarung der Erfindung

Die erfindungsgemäße Antriebsanordnung mit den Merkmalen des Anspruchs 1 zeichnet sich demgegenüber dadurch aus, dass mittels einer besonders einfachen und kostengünstigen Konstruktion eine einfache und präzise Wiederverschraubung der Antriebseinheit an einer Rahmenschnittstelle ermöglicht wird. Zudem kann eine besonders robuste und zuverlässige Befestigung der Antriebseinheit ermöglicht werden. Dies wird erreicht durch eine Antriebsanordnung eines Fahrzeugs, umfassend eine Antriebseinheit, eine Rahmenschnittstelle, und eine Schraube. Die Antriebseinheit und die Rahmenschnittstelle sind mittels der Schraube entlang einer Schraubenachse miteinander verschraubt. Dabei weist die Antriebseinheit und/oder die Rahmenschnittstelle und/oder die Schraube eine vordefinierte Oberflächenstruktur auf. Die vordefinierte Oberflächenstruktur ist so ausgebildet, um bei einem erstmaligen Verschrauben der Antriebseinheit mit einer vordefinierten Vorspannkraft einen Bereich des entsprechenden an die Oberflächenstruktur angrenzenden Elements, also die Antriebseinheit oder die Rahmenschnittstelle oder die Schraube, vordefiniert plastisch zu verformen. Die Oberflächenstruktur ist dabei eingerichtet, diesen Bereich derart zu verformen, dass die Oberflächenstruktur und der plastisch verformte Bereich einen Formschluss in einer zur Schraubenachse senkrechten Ebene bilden. Als Formschluss wird dabei ein in der zur Schraubenachse senkrechten Ebene zumindest teilweises Ineinandergreifen der Oberflächenstruktur und des plastisch verformten Bereichs angesehen.

Mit anderen Worten umfasst die Antriebseinheit zwei mittels einer Schraube verschraubbare Bauteile, nämlich die Antriebseinheit und die Rahmenschnittstelle, wobei eines dieser Bauteile oder die Schraube die vordefinierte Oberflächenstruktur aufweist, und wobei das Element, welches benachbart zu dem mit der Oberflächenstruktur versehenen Element angeordnet ist, den vordefiniert plastisch verformten Bereich, welcher bei erstmaligen Verschrauben durch ein Gegenpresen der Oberflächenstruktur erzeugt wird, aufweist. Die Oberflächenstruktur und der plastisch verformte Bereich greifen dabei derart ineinander, um in der zur Schraubenachse senkrechten Ebene einen Formschluss zu bilden.

Die Antriebseinheit umfasst vorzugsweise ein Gehäuse und innerhalb des Gehäuses einen Motor und/oder ein Getriebe. Die Rahmenschnittstelle kann beliebig ausgestaltet sein. Beispielsweise kann es sich bei der Rahmenschnittstelle um einen Teilbereich eines Fahrzeugrahmens eines Fahrzeugs handeln. Alternativ bevorzugt handelt es sich bei der Rahmenschnittstelle um ein Halteblech, welches vorzugsweise vorgesehen ist zur Verschraubung an einem Fahrzeugrahmen, insbesondere mittels einer weiteren separaten Schraubenverbindung.

Als Oberflächenstruktur kann insbesondere eine Erhöhung und/oder Vertiefung einer Oberfläche des entsprechenden Elements angesehen werden. Beispielsweise bewirkt eine Erhöhung als Oberflächenstruktur eine entsprechende Vertiefung im angrenzenden Element. Insbesondere kann eine Vertiefung ein plastisches Fließen in dem zu verformenden Bereich des angrenzenden Elements hervorrufen, derart, dass eine zumindest teilweise der Vertiefung entsprechende Erhöhung im angrenzenden Bauteil erreicht werden kann.

Die Antriebsanordnung bietet dabei den Vorteil, dass die beim erstmaligen Verschrauben festgelegte relative Anordnung von Antriebseinheit und Rahmenschnittstelle, insbesondere bezogen auf die zur Schraubenachse senkrechte Ebene, auf besonders einfache Weise reproduziert werden kann, beispielsweise nach einem Lösen der Verschraubung bei einer Demontage der Antriebseinheit. Erfindungsgemäss definiert hierbei der beim erstmaligen Verschrauben mittels der Oberflächenstruktur erzeugte plastisch verformte Bereich die relative Position der Antriebseinheit und der Rahmenschnittstelle zueinander. Das heißt, wenn die Antriebseinheit und die Schnittstelle nach einer ersten Demontage in gelösten Zustand vorliegen und wieder verschraubt werden sollen, finden diese anhand der erzeugten vordefinierten plastischen Verformung einfach wieder an die zuvor festgelegte Position zueinander. Dadurch kann ein besonders einfacher und schneller erneuter Zusammenbau der Antriebsanordnung erfolgen, insbesondere ohne dass zur Wiedermontage eine spezielle Lehre zur exakten relativen Positionierung notwendig ist. Dadurch kann eine besonders hohe Positioniergenauigkeit bei einer Wiederverschraubung, insbesondere ohne zusätzliche Lehre, gewährleistet werden.

Ein weiterer Vorteil ist, dass durch den Formschluss eine gegenüber eine Querbelastung besonders robuste und zuverlässig haltende Verschraubung ermöglicht wird. Insbesondere kann durch den Formschluss ein Rutschen der entsprechenden angrenzenden Elemente relativ zueinander in der zur Schraubenachse senkrechten Ebene verhindert werden. Dadurch kann auch bei wechselnden Belastungen, die auf eines oder mehrere der Elemente der Verschraubungsanordnung wirken über die gesamte Lebensdauer eine besonders robuste und zuverlässig haltende Verschraubung ermöglicht werden.

Als Vorspannkraft wird insbesondere eine minimale Montagevorspannkraft angesehen, welche für das Verschrauben notwendig ist, insbesondere um nach der plastischen Verformung eine vordefinierte Klemmkraft zwischen Antriebseinheit und Rahmenschnittstelle zu erzeugen. Vorzugsweise ist die Verschraubung so ausgelegt, dass die minimale Vorspannkraft bei einem Anziehen der Schraube mit einem vordefinierten Anzugsdrehmoment von bevorzugt mindesten 8 Nm, vorzugsweise maximal 12 Nm, besonders bevorzugt 10 Nm vorliegt.

Die Unteransprüche haben bevorzugte Weiterbildungen der Erfindung zum Inhalt.

Bevorzugt weist der plastisch zu verformende Bereich eine niedrigere Härte als die Oberflächenstruktur auf. Insbesondere wird als Härte dabei eine Rockwell-Härte und/oder eine Brinell-Härte und/oder eine Vickers-Härte und/oder eine Martens-Härte angesehen. Besonders bevorzugt weist der zu verformende Bereich eine um mindestens 5 %, vorzugsweise mindestens 20 %, niedrigere Vickers-Härte auf. Dadurch kann besonders einfach und zuverlässig die vordefinierte plastische Verformung erreicht werden, wobei die Oberflächenstruktur unverformt bleibt. Vorzugsweise weist die Rahmenschnittstelle eine niedrigere Härte als die Schraube auf. Weiter bevorzugt weist die Antriebseinheit eine niedrigere Härte als die Rahmenschnittstelle auf.

Besonders bevorzugt weist die Oberflächenstruktur eine Ringschneide auf, welche konzentrisch zur Schraubenachse ausgebildet ist. Als Ringschneide wird ein von einer Oberfläche vorstehendes Element angesehen, welches im Querschnitt spitz zulaufend, insbesondere konisch, ausgebildet ist. Besonders vorteilhaft ist eine Ringschneide, welche an einer Unterseite eines Schraubenkopfes der Schraube angeordnet ist. Eine Ringschneide bietet dabei eine besonders einfache und kostengünstig herzustellende Geometrie, welche die plastische Verformung des Bereichs des angrenzenden Bauteils ermöglichen kann.

Vorzugsweise weist die Ringschneide eine Verzahnung auf, welche in Umfangsrichtung der Ringschneide ausgebildet ist. Dadurch kann insbesondere ein weiterer Formschluss in Umfangsrichtung bezüglich der Schraubenachse hergestellt werden.

Weiter bevorzugt ist die Verzahnung in einem Radialschnitt, bezogen auf die Umfangsrichtung der ringförmig ausgebildeten Ringschneide, symmetrisch ausgebildet. Mit anderen Worten ist die Verzahnung achsensymmetrisch bezüglich der Schraubenachse ausgebildet. Dadurch kann die Verzahnung besonders einfach hergestellt werden.

Bevorzugt ist die Verzahnung in Form eines Sägezahnprofils ausgebildet. Mit anderen Worten weist die Ringschneide entlang dessen Umfangsrichtung das Sägezahnprofil auf. Das heißt, die Ringschneide weist Bereiche auf, welche gegen die Eingriffsebene geneigt sind. Besonders vorteilhaft ist es, wenn eine Ringschneide mit Sägezahnprofil am Schraubenkopf vorgesehen ist, wodurch eine Schraubensicherung bzw. Lösesicherung nach dem Prinzip der schiefen Ebene erzeugt werden kann, für eine besonders zuverlässige Verschraubung.

Besonders bevorzugt weist die Oberflächenstruktur zumindest eine Einprägung auf. Vorzugsweise ist die zumindest eine Einprägung in Form einer Rändelung ausgebildet. Die Rändelung kann beispielsweise eine Kreuzrändelung und/oder eine doppelte Kreuzrändelung sein. Alternativ oder zusätzlich bevorzugt ist die Einprägung ein Dimple, wobei als Dimple insbesondere eine kreisrunde Vertiefung angesehen wird, welche vorzugsweise einen durch das Einprägen erzeugten Überstand an dessen Außenumfang aufweist. Weiter kann die Einprägung alternativ oder zusätzlich eine sternförmige Prägung sein. Besonders vorteilhaft ist eine Vielzahl von Einprägungen als Oberflächenstruktur.

Weiter bevorzugt weist die Schraube einen Schraubenkopf und einen Schraubenschaft auf. Der Schraubenschaft weist dabei eine Verdickung auf, welche unmittelbar an den Schraubenkopf angrenzt. Vorzugsweise ist die Verdickung gewindelos ausgebildet, wobei insbesondere der Rest des Schraubenschafts ein Gewinde aufweist. Bevorzugt weist die Verdickung einen ersten Außendurchmesser auf, welcher größer ist als ein zweiter Außendurchmesser des restlichen Schraubenschafts. Bevorzugt ist der erste Außendurchmesser mindestens 10 %, besonders bevorzugt mindestens 20 %, insbesondere maximal 50 %, größer als der zweite Außendurchmesser. Die Verdickung bewirkt dabei eine Verstärkung der Schraube im Bereich des Schraubenkopfes, wodurch eine erhöhte Querbelastung durch die Schraube in diesem Bereich übertragen werden kann, ohne dass die Gefahr eines Brechens der Schraube besteht. Dies ist besonders vorteilhaft, wenn die Oberflächenstruktur an der Unterseite des Schraubenkopfes ausgebildet ist.

Vorzugsweise weist die Rahmenschnittstelle eine Öffnung auf, durch welche die Schraube ragt. Vorzugsweise ist die Öffnung eine kreisrunde Durchgangsöffnung. Die Öffnung ist dabei zumindest teilweise kleiner als die Verdickung der Schraube. Mit anderen Worten ist ein minimaler Innendurchmesser der Öffnung kleiner als ein maximaler Außendurchmesser der Verdickung der Schraube. Vorzugsweise ist der minimale Innendurchmesser mindestens 3 %, vorzugsweise mindestens 10 %, insbesondere maximal 20 %, kleiner als der maximale Außendurchmesser der Verdickung. Dadurch bewirkt die Verdickung der Schraube beim Einschrauben in die Antriebseinheit eine Umformung zumindest eines Teils der Rahmenschnittstelle in Richtung der Antriebseinheit. Dadurch kann mittels des umgeformten Bereichs der Rahmenschnittstelle ein weiterer Formschluss durch zwischen Rahmenschnittstelle und Antriebseinheit erzeugt werden.

Besonders bevorzugt weist die Rahmenschnittstelle mehrere radiale Ausnehmungen auf, welche sich ausgehend von einer Innenwand der Öffnung radial nach außen erstrecken. Insbesondere sind die Ausnehmungen gleichmäßig um den Umfang der Öffnung verteilt. Insbesondere liegt dadurch eine im Wesentlichen sternförmige Öffnung vor, wobei durch die Ausnehmungen in Umfangsrichtung mehrere Laschen der Rahmenschnittstelle vorliegen, welche durch die Verdickung der Schraube besonders einfach und gezielt verformt werden können.

Vorzugsweise ist die Öffnung als Langloch ausgebildet. Insbesondere ist dabei eine minimale Breite des Langlochs kleiner als ein Außendurchmesser der Verdickung der Schraube, um die Verformung beim Einschrauben zu erzielen. Bevorzugt ist eine maximale Länge des Langlochs größer als die der Außendurchmesser der Verdickung der Schraube. Ein Langloch ist besonders vorteilhaft, wenn die Rahmenschnittstelle zusätzlich eine weitere Öffnung aufweist, in welcher eine weitere Schraube angeordnet ist, zur Verschraubung mit der Antriebseinheit. Die weitere Öffnung kann dabei vorzugsweise einen geringfügig größeren Innendurchmesser als die weitere Schraube, oder alternativ einen kleineren Innendurchmesser als die Verdickung der weiteren Schraube aufweisen, wodurch eine besonders präzise relative Anordnung von Rahmenschnittstelle und Antriebseinheit sichergestellt wird. Durch das Langloch können dabei Fertigungstoleranzen ausgeglichen werden.

Weiter bevorzugt weist die Antriebseinheit eine Schraubenöffnung auf, in welche die Schraube eingeschraubt ist. Die Schraubenöffnung weist dabei an einer der Rahmenschnittstelle zugewandten Seite eine Stufe auf, welche einen kleineren Innendurchmesser als die Öffnung der Rahmenschnittstelle aufweist. Das heißt, unmittelbar an die Rahmenschnittstelle angrenzend, weist die Antriebseinheit eine Erweiterung der Schraubenöffnung auf. Dadurch kann eine bessere Verformung der Rahmenschnittstelle durch die Verdickung der Schraube ermöglicht werden, da durch die Stufe freier Platz für die Verformung eines die Öffnung umgebenden Bereichs der Rahmenschnittstelle zur Verfügung steht. Insbesondere kann dadurch ein Teil der Rahmenschnittstelle in die Stufe der Schraubenöffnung hineinragen, um einen Formschluss herzustellen.

Vorzugsweise weist zumindest ein Teil der Antriebseinheit eine niedrigere Festigkeit als die Rahmenschnittstelle auf. Alternativ oder zusätzlich bevorzugt weist die Rahmenschnittstelle eine niedrigere Festigkeit als die Schraube auf. Vorzugsweise weist die Antriebseinheit ein Gehäuse auf, welches aus Magnesium oder Aluminium gebildet ist. Besonders bevorzugt ist das Gehäuse ein Druckgussbauteil. Weiter bevorzugt ist die Rahmenschnittstelle aus Aluminium oder Stahl gebildet. Vorzugsweise ist die Schraube aus Stahl gebildet.

Weiterhin führt die Erfindung zu einem Fahrzeug, bevorzugt einem mit Muskelkraft und/oder Motorkraft betreibbaren Fahrzeug, vorzugsweise einem Elektrofahrrad, welches die beschriebene Antriebsanordnung umfasst. Durch die spezielle Verschraubung in der Antriebsanordnung kann die Antriebseinheit dabei besonders genau am Fahrzeug montiert werden, wodurch stets eine optimale Lage relativ zu weiteren Komponenten des Fahrzeugs, wie einem Fahrzeugrahmen, sichergestellt wird.

Bevorzugt umfasst das Fahrzeug einen Fahrzeugrahmen, wobei die Rahmenschnittstelle der Verschraubungsanordnung ein integraler Bestandteil des Fahrzeugrahmens ist. Alternativ ist die Rahmenschnittstelle der Verschraubungsanordnung ein separates Bauteil, welches mit dem Fahrzeugrahmen verschraubt ist, wobei die Rahmenschnittstelle vorzugsweise ein Halteblech ist. Dadurch kann auf besonders einfache und kostengünstige Weise eine genaue und wiederholbare Montage der Antriebseinheit am Fahrzeug ermöglicht werden.

Weiterhin führt die Erfindung zu einem Verfahren zur Montage einer Antriebsanordnung eines Fahrzeugs. Das Verfahren umfasst die, insbesondere in der beschriebenen Reihenfolge nacheinander ausgeführten, Schritte:
- Positionieren einer Antriebseinheit relativ zu einer Rahmenschnittstelle des Fahrzeugs mittels eines Kalibrierwerkzeugs,
- erstmaliges Verschrauben der Antriebseinheit mit der Rahmenschnittstelle mittels einer Schraube, um eine vordefinierte Vorspannkraft zu erzeugen, derart, dass eine Oberflächenstruktur der Antriebseinheit und/oder der Rahmenschnittstelle und/oder der Schraube einen Bereich des angrenzenden Elements plastisch verformt,
- Lösen der Verschraubung,
- Positionieren der Antriebseinheit relativ zum Fahrzeugrahmen mittels der Oberflächenstruktur und dem plastisch verformten Bereich, und
- erneutes Verschrauben der Antriebseinheit mit der Rahmenschnittstelle mittels der Schraube.

Das Verfahren erlaubt somit eine einfache Montage sowie eine besonders einfache Wiedermontage nach einer Demontage der Antriebseinheit an der Rahmenschnittstelle des Fahrzeugs.

### Kurze Beschreibung der Zeichnungen

Im Folgenden wird die Erfindung anhand von Ausführungsbeispielen in Verbindung mit den Figuren beschrieben. In den Figuren sind funktional gleiche Bauteile jeweils mit gleichen Bezugszeichen gekennzeichnet. Dabei zeigt:
- Figur 1: eine Schnittansicht einer Antriebsanordnung gemäß einem ersten Ausführungsbeispiel der Erfindung,
- Figur 2: eine perspektivische Ansicht einer Schraube einer Antriebsanordnung gemäß einem zweiten Ausführungsbeispiel der Erfindung,
- Figur 3: eine perspektivische Ansicht einer Schraube einer Antriebsanordnung gemäß einem dritten Ausführungsbeispiel der Erfindung,
- Figur 4: Ansichten einer Schraube einer Antriebsanordnung gemäß einem vierten Ausführungsbeispiel der Erfindung,
- Figur 5: eine Schnittansicht einer Schraube einer Antriebsanordnung gemäß einem fünften Ausführungsbeispiel der Erfindung,
- Figur 6: eine Detailansicht einer Rahmenschnittstelle einer Antriebsanordnung gemäß einem sechsten Ausführungsbeispiel der Erfindung,
- Figur 7: Detailansichten einer Rahmenschnittstelle einer Antriebsanordnung gemäß einem siebten Ausführungsbeispiel der Erfindung,
- Figur 8: eine Detailansicht einer Rahmenschnittstelle einer Antriebsanordnung gemäß einem achten Ausführungsbeispiel der Erfindung,
- Figur 9: eine Schnittansicht der Antriebsanordnung gemäß dem achten Ausführungsbeispiel der Erfindung,
- Figur 10: eine weitere Schnittansicht der Antriebsanordnung gemäß dem achten Ausführungsbeispiel der Erfindung,
- Figur 11: eine Detailansicht einer Rahmenschnittstelle einer Antriebsanordnung gemäß einem neunten Ausführungsbeispiel der Erfindung, und
- Figur 12: eine vereinfachte schematische Ansicht eines Fahrzeugs mit der Antriebsanordnung gemäß einem der Ausführungsbeispiele der Erfindung.

### Bevorzugte Ausführungsformen der Erfindung

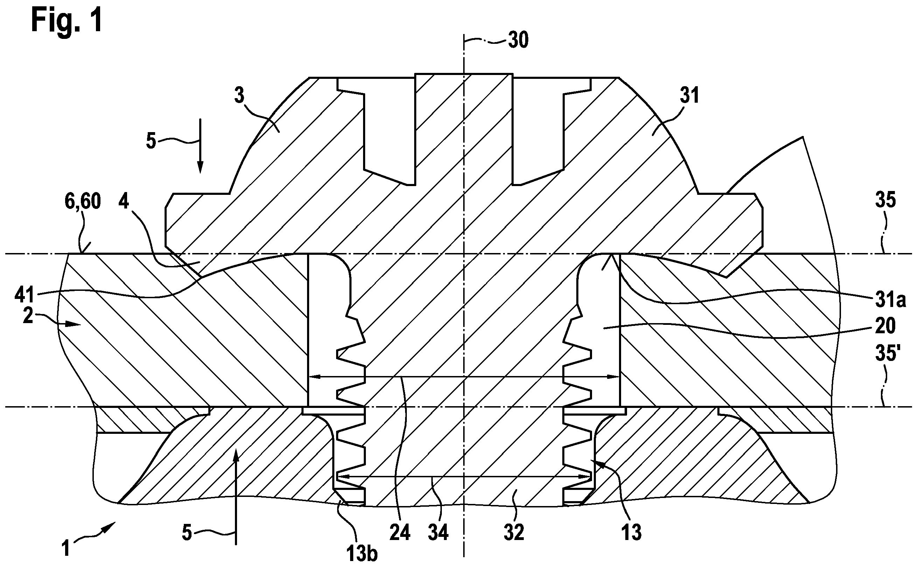

Figur 1 zeigt eine Schnittansicht einer Antriebsanordnung 10 gemäß einem ersten Ausführungsbeispiel der Erfindung, wobei in der Figur 1 nur ein Ausschnitt der Antriebsanordnung 10 dargestellt ist. Die Antriebsanordnung 10 umfasst eine Antriebseinheit 1, eine Rahmenschnittstelle 2 und eine Schraube 3.

Die Antriebseinheit 1 umfasst einen Motor und/oder ein Getriebe (nicht dargestellt). Der in der Figur 1 dargestellte Teil der Antriebsanordnung 1 ist ein Gehäuse, welches den Motor und/oder das Getriebe umgibt.

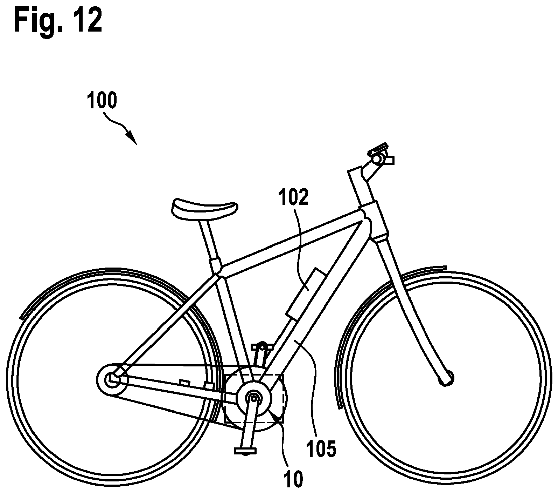

Die Rahmenschnittstelle 2 ist als Halteblech ausgebildet, um die Antriebseinheit 1 an einem Fahrzeugrahmen 105 eines Fahrzeugs 100 (vgl. Figur 12) zu befestigen.

Die Antriebseinheit 1 und die Rahmenschnittstelle 2 sind mittels der Schraube 3 entlang einer Schraubenachse 30 miteinander verschraubt. Die Schraube 3 ist dabei in eine Schraubenöffnung 13, welche ein Innengewinde 13b aufweist, der Antriebseinheit 1 eingeschraubt. Die Rahmenschnittstelle 2 ist zwischen einem Schraubenkopf 31 der Schraube 3 und der Antriebseinheit 1 angeordnet.

Indem die Schraube 3 mit einem vordefinierten Drehmoment angezogen wird, stellt sich eine vordefinierte Vorspannkraft 5 ein, welche parallel zur Schraubenachse 30 auf die Rahmenschnittstelle 2 ausgeübt wird.

Bei einem erstmaligen Zusammenschrauben der Antriebsanordnung 10 werden vorzugsweise die Antriebseinheit 1 und die Rahmenschnittstelle 2 mittels einer (nicht gezeigten) speziellen Lehre relativ zueinander ausgerichtet, um eine präzise Positionierung zu ermöglichen.

Die Schraube 3 weist dabei eine vordefinierte Oberflächenstruktur 4 auf, welche als Erhebung an einer Unterseite 31a des Schraubenkopfes 31 ausgebildet ist. Die Schraube 3 und die Rahmenschnittstelle 2 sind so ausgebildet, dass sich die Oberflächenstruktur 4 beim erstmaligen Verschrauben der Antriebseinheit 10 in eine dem Schraubenkopf 31 zugewandte Oberseite 60 der Rahmenschnittstelle 2 eingräbt, das heißt einen Bereich 6 der Rahmenschnittstelle 2 vordefiniert plastisch verformt. Insbesondere wird dabei ein der Form der Oberflächenstruktur 4 entsprechender Abdruck in der Oberseite 60 der Rahmenschnittstelle 2 erzeugt. Diese vordefinierte plastische Verformung tritt dann auf, wenn der Schraubenkopf 31 mit der vordefinierten Vorspannkraft gegen die Rahmenschnittstelle 2 drückt. Um die plastische Verformung besonders gezielt auszubilden, weist die Rahmenschnittstelle 2 eine niedrigere Härte als der Schraubenkopf 31 der Schraube 3 auf.

Die spezielle Verformung der Rahmenschnittstelle 2 mittels der Oberflächenstruktur 4 der Schraube 3 bewirkt dabei, dass die plastische Verformung in dem Bereich 6 auch nach einem Lösen der Verschraubung erhalten bleibt. Das Lösen kann beispielsweise erforderlich sein, wenn die Antriebseinheit 1 für Wartungszwecke vom Fahrzeugrahmen 105 demontiert werden muss. Bei einem erneuten Wiederverschrauben der Antriebsanordnung 10 kann dabei auf einfache Weise die präzise Positionierung des erstmaligen Verschraubens reproduziert werden, indem die Oberflächenstruktur 4 und der plastisch verformte Bereich 6 aneinander ausgerichtet werden. Die Antriebsanordnung 10 bietet somit eine einfache und kostengünstige Konstruktion, welche eine wiederholgenaue Montage mit besonders niedrigem Aufwand ermöglicht.

Ein weiterer Vorteil der Antriebsanordnung 10 ist, dass die Oberflächenstruktur 4 und der plastisch verformte Bereich 6 einen Formschluss bilden, welcher in einer zur Schraubenachse 30 senkrechten Ebene 35 wirkt. Das heißt, die Oberflächenstruktur 4 und der entsprechende durch diese erzeugte Abdruck 6 greifen bezüglich der Ebene 35 ineinander und bewirken somit den Formschluss. Der Formschluss wirkt dabei zusätzlich zu einem durch die Klemmkraft der Schraube 3 erzeugtem Reibschluss zwischen Schraubenkopf 31 und Rahmenschnittstelle 2. Dadurch kann eine besonders hohe Querkraft mittels der Schraubenverbindung übertragen werden. Insbesondere kann dadurch ein Rutschen der Schraubverbindung besonders zuverlässig unterbunden werden.

Im ersten Ausführungsbeispiel der Figur 1 ist die Oberflächenstruktur 4 in Form einer Ringschneide 41 ausgebildet. Die Ringschneide 41 ist dabei konzentrisch zur Schraubenachse 30 an der Unterseite 31a des Schraubenkopfes 31 ausgebildet. Im Querschnitt ist die Ringschneide 41 in Richtung der Rahmenschnittstelle 2 spitz zulaufend, vorzugsweise konisch, ausgebildet. Die Ringschneide 41 bewirkt dabei besonders gezielt und einfach ein Eingraben in die Rahmenschnittstelle 2 beim erstmaligen Verschrauben. Zudem kann dadurch ein besonders einfaches und genaues Wiederverschrauben ermöglicht werden, da durch die spitz zulaufende Geometrie ein einfaches Wiederfinden und zueinander Ausrichten von Schraube 3 und Rahmenschnittstelle 2 beim erneuten Verschrauben erreicht wird.

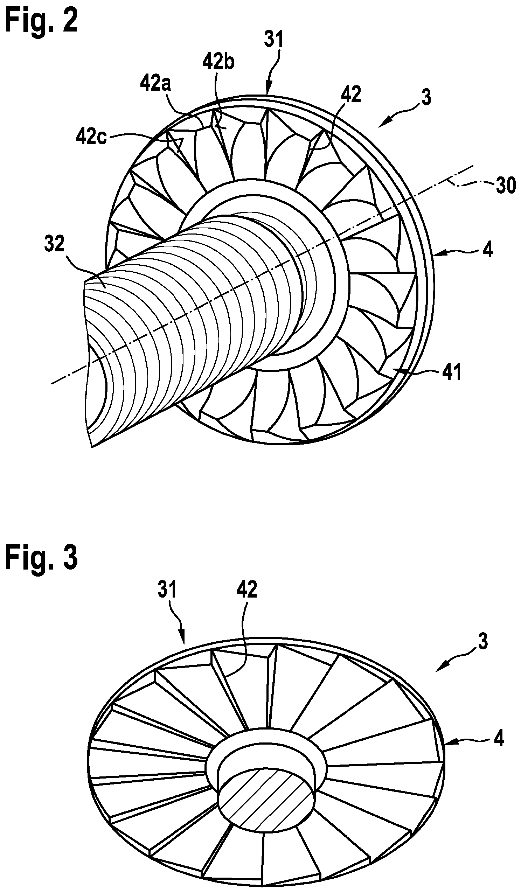

Figur 2 zeigt eine perspektivische Detailansicht einer Schraube 3 einer Antriebsanordnung 10 gemäß einem zweiten Ausführungsbeispiel der Erfindung. Das zweite Ausführungsbeispiel entspricht im Wesentlichen dem ersten Ausführungsbeispiel der Figur 1, mit dem Unterschied, dass die Ringschneide 41 zusätzlich eine Verzahnung 42 in Umfangsrichtung des Schraubenkopfes 31 aufweist. Die Verzahnung 42 ist dabei in Form eines Sägezahnprofils ausgebildet. Im Detail weist die Verzahnung 42 eine Vielzahl an gleichmäßig um den Umfang verteilte Zähne 42a auf, wobei jeder Zahn 42a eine radial und parallel zur Schraubenachse 30 ausgerichtete erste Seitenfläche 42b und eine radial ausgerichtete und zur ersten Seitenfläche 42b geneigt ausgerichtete zweite Seitenfläche 42c aufweist. Die Verzahnung 42 bewirkt dabei einen weiteren Formschluss in Umfangsrichtung durch entsprechendes Eingraben in die Rahmenschnittstelle 2, wodurch zudem eine Lösesicherung der Schraube 3 erreicht wird.

Figur 3 zeigt eine perspektivische Detailansicht einer Schraube 3 einer Antriebsanordnung 10 gemäß einem dritten Ausführungsbeispiel der Erfindung. Das dritte Ausführungsbeispiel entspricht im Wesentlichen dem zweiten Ausführungsbeispiel der Figur 2, wobei die Oberflächenstruktur 4 nicht in Form einer Ringschneide 41 ausgebildet ist, sondern wobei die als Sägezahnprofil ausgebildete Verzahnung 42 sich gleichmäßig in radialer Richtung über den gesamten Schraubenkopf 31 erstreckt. Dadurch kann eine besonders große Fläche für die Verzahnung und damit Schraubensicherung bereitgestellt werden.

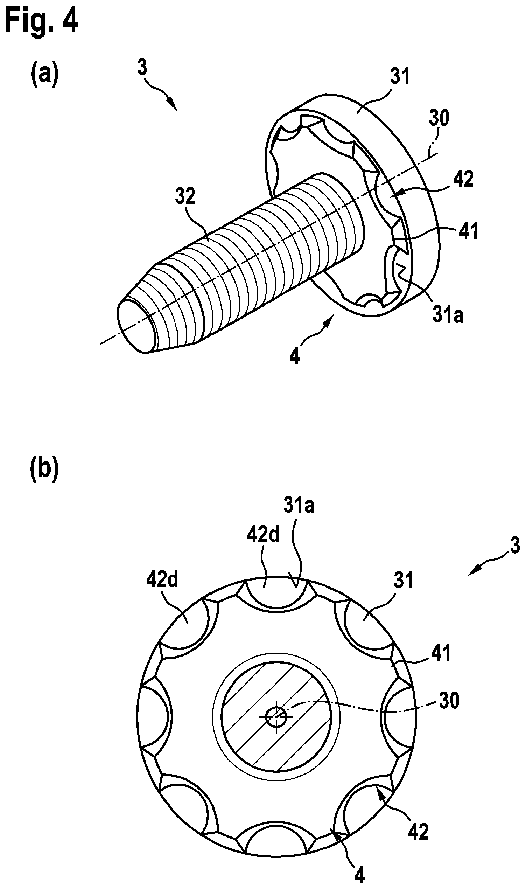

Figur 4 zeigt perspektivische Detailansichten einer Schraube 3 einer Antriebsanordnung 10 gemäß einem vierten Ausführungsbeispiel der Erfindung. Das vierte Ausführungsbeispiel entspricht im Wesentlichen dem ersten Ausführungsbeispiel der Figur 1, mit dem Unterschied, dass die Ringschneide 41 zusätzlich eine Verzahnung 42 aufweist, welche in einem Radialschnitt symmetrisch ausgebildet ist. Im Detail weist die Ringschneide 41 eine Vielzahl an gleichmäßig um den Umfang des Schraubenkopfes 31 verteilte Ausnehmungen 42d auf. Die Ausnehmungen 42d sind im Wesentlichen halbkreisförmig und an einem radial äußersten Ende des Schraubenkopfes 31 angeordnet. Die Ausnehmungen 42a reichen dabei in Richtung parallel zur Schraubenachse 30 bis zur Unterseite 31a des Schraubenkopfes 31.

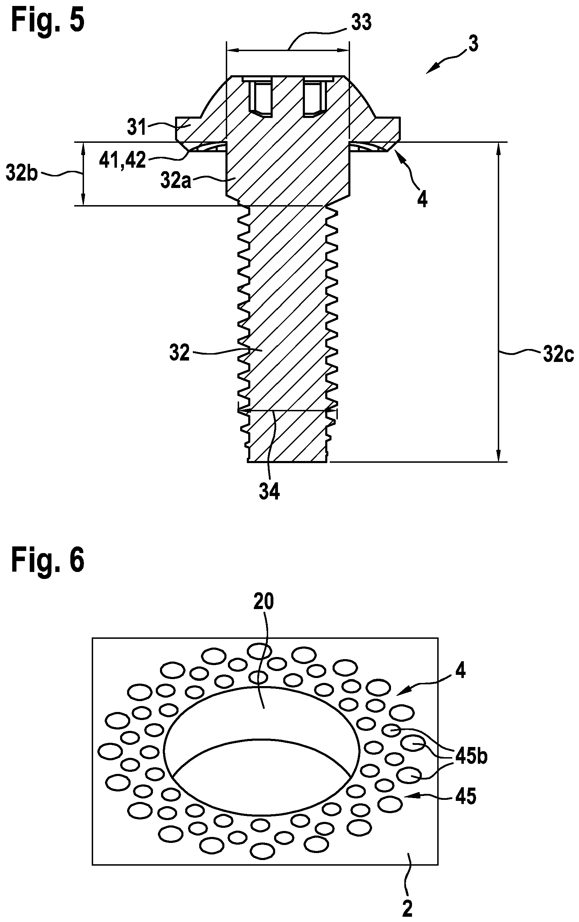

Figur 5 zeigt eine Schnittansicht einer Schraube 3 einer Antriebsanordnung 10 gemäß einem fünften Ausführungsbeispiel der Erfindung. Das fünfte Ausführungsbeispiel entspricht im Wesentlichen dem ersten Ausführungsbeispiel der Figur 1, mit dem Unterschied, dass die Schraube 3 zusätzlich eine Verdickung 32a an einem Schraubenschaft 32 aufweist. Die Verdickung 32a ist dabei unmittelbar an den Schraubenkopf 31 angrenzend angeordnet und erstreckt sich über eine erste Länge 32b, welche vorzugsweise etwa 20 % einer gesamten Länge 32c des gesamten Schraubenschafts 32 entspricht. Die Verdickung 32a weist dabei einen ersten Durchmesser 33 auf, welcher etwa 20 % größer ist als ein Gewindedurchmesser 34 des Gewindes des restlichen Schraubenschafts 32. Die Verdickung 32a bewirkt dabei eine erhöhte Stabilität der Schraube 3, um im Bereich der Ebene 35 (vgl. Figur 1) besonders hohe Querkräfte übertragen zu können, ohne dass ein Brechen der Schraube 3 auftritt.

Figur 6 zeigt eine Detailansicht einer Rahmenschnittstelle 2 einer Antriebsanordnung 10 gemäß einem sechsten Ausführungsbeispiel der Erfindung. Das sechste Ausführungsbeispiel entspricht im Wesentlichen dem ersten Ausführungsbeispiel der Figur 1, wobei zusätzlich zur Oberflächenstruktur 4 an der Schraube 3 die Rahmenschnittstelle 2 eine Oberflächenstruktur 4 aufweist. Die Oberflächenstruktur 4 der Rahmenschnittstelle 2 ist dabei in Form einer Vielzahl von Einprägungen 45, im Detail in Form von kreisrunden Dimpeln 45b, welche eine Öffnung 20, durch die der Schraubenschaft 32 der Schraube 3 ragt, ausgebildet. Wie in der Figur 6 zu erkennen, sind dabei drei Reihen mit jeweils mehreren gleichmäßig in Umfangsrichtung verteilt angeordneten Dimpeln 45b ausgebildet. Die Einprägungen 45 bewirken dabei ähnlich der Ringschneide 41 eine plastische Verformung eines Bereichs des angrenzenden Elements in einer zweiten Trennebene 35' (vgl. Figur 1). In diesem Fall bewirken die Einprägungen 45 eine plastische Verformung der Antriebseinheit 1, wodurch ein zusätzlicher Formschluss in der zweiten Trennebene 35' hergestellt wird. Dadurch ergeben sich im Wesentlichen dieselben Vorteile, wie beim Formschluss zwischen Schraube 3 und Rahmenschnittstelle 2.

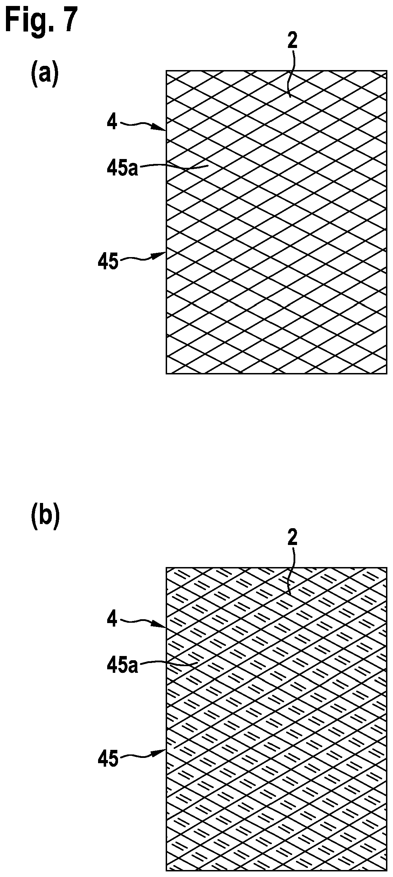

Figur 7 zeigt Detailansichten einer Rahmenschnittstelle 2 einer Antriebsanordnung 10 gemäß einem siebten Ausführungsbeispiel der Erfindung. Das siebte Ausführungsbeispiel entspricht im Wesentlichen dem sechsten Ausführungsbeispiel der Figur 6, mit einer alternativen Ausgestaltung der Einprägungen 45. Im siebten Ausführungsbeispiel sind die Einprägungen in Form einer Rändelung 45a ausgebildet. Figur 7(a) zeigt dabei eine Kreuzrändelung mit einem rautenförmigen Muster. Figur 7(b) zeigt eine weitere Variante der Rändelung 45a in Form einer doppelten Kreuzrändelung, welche auf jedem der rautenförmigen Bereiche zusätzlich zwei weitere Einprägungen aufweist, um eine noch höhere Rauigkeit zu erzeugen. Die Rändelung 45a bewirkt einen ähnlichen Effekt wie die Dimpel 45b der Figur 6.

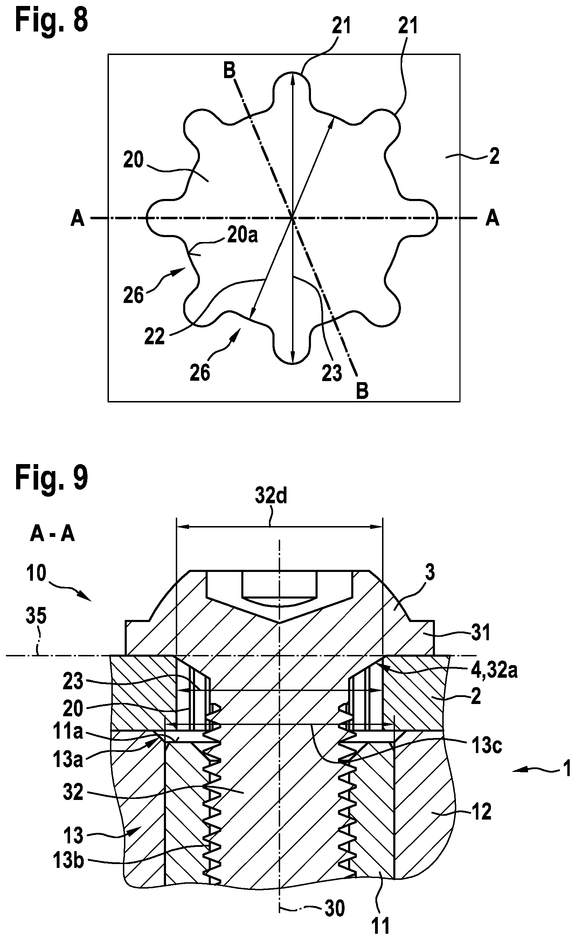

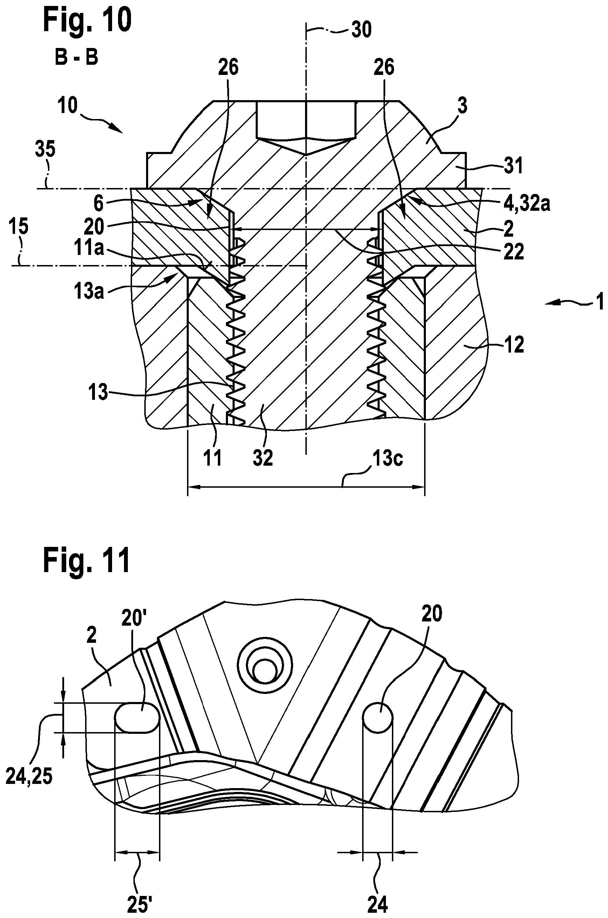

Die Figuren 8 bis 10 zeigen Detailansichten einer Antriebsanordnung 10 gemäß einem achten Ausführungsbeispiel der Erfindung. Das achte Ausführungsbeispiel entspricht im Wesentlichen dem ersten Ausführungsbeispiel der Figur 1, mit dem Unterschied einer alternativen Ausgestaltung von Rahmenschnittstelle 2 und Schraube 3. Figur 8 zeigt dabei eine Draufsicht auf die Rahmenschnittstelle 2. In Figur 9 ist ein Schnitt der gesamten Antriebsanordnung 10 entlang der in Figur 8 gekennzeichneten Schnittlinie A-A dargestellt. Figur 10 zeigt einen Schnitt der gesamten Antriebsanordnung 10 entlang der in Figur 8 gekennzeichneten Schnittlinie B-B.

Im achten Ausführungsbeispiel weist die Rahmenschnittstelle 2 eine Öffnung 20 auf, welche einen minimalen Innendurchmesser 22 aufweist, der kleiner ist als der maximale Außendurchmesser 32d der Verdickung 32a der Schraube 3. Die Rahmenschnittstelle 2 weist dabei mehrere gleichmäßig um den Umfang der Öffnung 20 verteilte radiale Ausnehmungen 21 auf, welche sich ausgehend von einer Innenwand 20a der Öffnung 20 radial nach außen erstrecken. Ein maximaler Innendurchmesser 23 der mittels der Ausnehmungen 21 erweiterten Öffnung 20 ist dabei größer dem maximalen Außendurchmesser 32d der Verdickung 32a. Dadurch ist die Rahmenschnittstelle 2 so ausgebildet, dass diese mehrere Laschen 26 an der Öffnung 20 aufweist, welche beim Einschrauben der Schraube 3 mittels die Verdickung 31a der Schraube 3 verformt werden. Im Detail werden diese Laschen 26 beim vollständigen Einschrauben der Schraube 3 in Richtung der Antriebseinheit 1 verformt, sodass die Laschen 26 teilweise in die Antriebseinheit 1 hineinragen, wie in der Figur 10 dargestellt. Hierdurch ergibt sich der Formschluss an der zweiten Trennebene 15.

Um die Verformung der Laschen 26 zu erleichtern, weist die Antriebseinheit 2 eine Stufe 13a auf, welche an der der Rahmenschnittstelle 2 zugewandten Seite der Antriebseinheit 1 eine Vergrößerung der Schraubenöffnung 13 bildet. Dadurch können sich die Laschen 26 teilweise in die Stufe 13a hinein verformen. Die Stufe 13a weist dabei einen Innendurchmesser 13c auf, der größer ist als der minimale Innendurchmesser 22 der Öffnung 20, allerdings kleiner als der maximale Innendurchmesser 23 der Öffnung 20.

Wie in den Figuren 9 und 10 abgebildet, kann die Antriebseinheit 1 im Bereich der Schraubenöffnung 13 zweiteilig ausgebildet sein. Im Detail weist die Antriebseinheit 1 hierbei eine Hülse 11 auf, welche in eine Gehäusewand 12 der Antriebseinheit 1 eingefügt ist, wobei die Schraube 3 in die Hülse 11 eingeschraubt ist. Die Hülse 11 kann dabei so ausgebildet sein, dass ein oberes Ende 11a der Hülse 11 nicht bis zur zweiten Trennebene 15 reicht, also in einem vordefinierten Abstand zur Trennebene 15 liegt, wodurch die Stufe 13a gebildet wird.

Figur 11 zeigt eine Detailansicht einer Rahmenschnittstelle 2 einer Antriebsanordnung 10 gemäß einem neunten Ausführungsbeispiel der Erfindung.

Das neunte Ausführungsbeispiel entspricht im Wesentlichen dem ersten Ausführungsbeispiel der Figur 1, wobei in der Rahmenschnittstelle 2 zwei Öffnungen 20, 20' ausgebildet sind, um eine Verschraubung an zwei Punkten zu ermöglichen. Eine erste Öffnung 20 weist dabei einen Durchmesser 24 auf, welcher wie in der Figur 1 dargestellt, nur geringfügig größer ist als der Gewindedurchmesser 34 der Schraube 3. Eine zweite Öffnung 20' ist als Langloch ausgebildet und weist eine minimale Weite 25 auf, welche dem Durchmesser 24 der ersten Öffnung 20 entspricht. Eine maximale Weite 25' ist dabei, vorzugsweise 10 %, größer als die minimale Weite 25. Dadurch kann besonders einfach ein Toleranzausgleich erfolgen. Besonders vorteilhaft ist es dabei, wenn der Durchmesser 24 und die minimale Weite 25 kleiner als der maximale Außendurchmesser 32d der Verdickung 32 der Schraube 3 sind, sodass wie im achten Ausführungsbeispiel der Figuren 8 bis 10 eine Verformung der Rahmenschnittstelle 2 durch das Einschrauben der Schraube 3 auftritt. In diesem Fall erfolgt sowohl an der ersten Öffnung 20, als auch an der zweiten Öffnung 20' eine derartige Verformung, wobei an der zweiten Öffnung 20' die Verformung nur bezüglich der minimalen Weite 25 auftritt.

Figur 12 zeigt eine vereinfachte schematische Ansicht eines mit Muskelkraft und/oder Motorkraft betreibbaren Fahrzeugs 100, welches eine Antriebsanordnung 10 gemäß einem der beschriebenen Ausführungsbeispiele umfasst. Bei dem Fahrzeug 100 handelt es sich um ein Elektrofahrrad mit einem Elektromotor zur Unterstützung einer Tretkraft eines Fahrers. Der Elektromotor ist Teil der Antriebseinheit 1 der Antriebsanordnung 10 und wird von einem Akku 102 mit elektrischer Energie versorgt. Die Rahmenschnittstelle 2 der Antriebsanordnung 10 ist dabei ein Teil eines Fahrzeugrahmens 105 des Fahrzeugs 100 und/oder mit dem Fahrzeugrahmen 105 verbunden oder verbindbar.

## Patentansprüche

1. Antriebsanordnung eines, insbesondere mit Muskelkraft und/oder Motorkraft betreibbaren, Fahrzeugs (100), umfassend:
- eine Antriebseinheit (1),
- eine Rahmenschnittstelle (2), und
- eine Schraube (3),
wobei die Antriebseinheit (1) und die Rahmenschnittstelle (2) mittels der Schraube (3) entlang einer Schraubenachse (30) miteinander verschraubt sind, und
wobei die Antriebseinheit (1) und/oder die Rahmenschnittstelle (2) und/oder die Schraube (3) eine vordefinierte Oberflächenstruktur (4) aufweist, welche so ausgebildet ist, um bei einem erstmaligen Verschrauben mit mindestens einer vordefinierten Vorspannkraft (5) einen Bereich (6) des angrenzenden Elements (1, 2, 3) plastisch zu verformen, **dadurch gekennzeichnet, dass** dies derart geschieht, dass die Oberflächenstruktur (4) und der plastisch ver-
formte Bereich (6) einen Formschluss in einer zur Schraubenachse (30) senkrechten Ebene (35) bilden und wobei der plastisch verformte Bereich die relative Position der Antriebseinheit und der Rahmenschnittstelle zueinander definiert.

2. Verschraubungsanordnung nach Anspruch 1, wobei der plastisch zu verformende Bereich (6) eine niedrigere Härte als die Oberflächenstruktur (4) aufweist.

3. Verschraubungsanordnung nach einem der vorhergehenden Ansprüche, wobei die Oberflächenstruktur (4) eine Ringschneide (41) aufweist, welche konzentrisch zur Schraubenachse (30) ausgebildet ist.

4. Verschraubungsanordnung nach Anspruch 3, wobei die Ringschneide (41) eine Verzahnung (42) in Umfangsrichtung aufweist.

5. Verschraubungsanordnung nach Anspruch 4, wobei die Verzahnung (42) in einem Radialschnitt symmetrisch ausgebildet ist.

6. Verschraubungsanordnung nach Anspruch 4, wobei die Verzahnung (42) in Form eines Sägezahnprofils ausgebildet ist.

7. Verschraubungsanordnung nach einem der vorhergehenden Ansprüche, wobei die Oberflächenstruktur (4) zumindest eine Einprägung (45), insbesondere in Form einer Rändelung (45a) und/oder eines Dimpels (45b), aufweist.

8. Verschraubungsanordnung nach einem der vorhergehenden Ansprüche, wobei die Schraube (3) einen Schraubenkopf (31) und einen Schraubenschaft (32) aufweist, und wobei der Schraubenschaft (32) eine, insbesondere gewindelose, Verdickung (32a) unmittelbar am Schraubenkopf (31) angrenzend aufweist.

9. Verschraubungsanordnung nach Anspruch 8, wobei die Rahmenschnittstelle (2) eine Öffnung (20) aufweist, durch welche die Schraube (3) ragt, und wobei die Öffnung (20) zumindest teilweise kleiner als die Verdickung (32a) der Schraube (3) ist.

10. Verschraubungsanordnung nach Anspruch 9, wobei die Rahmenschnittstelle (2) mehrere radiale Ausnehmungen (21) aufweist, welche sich ausgehend von einer Innenwand (20a) der Öffnung (20) radial nach außen erstrecken.

11. Verschraubungsanordnung nach einem der Ansprüche 9 oder 10, wobei die Öffnung (20) als Langloch ausgebildet ist.

12. Verschraubungsanordnung nach einem der Ansprüche 9 bis 11, wobei die Antriebseinheit (1) eine Schraubenöffnung (13) aufweist, in welche die Schraube (3) eingeschraubt ist, wobei die Schraubenöffnung (13) an einer der Rahmenschnittstelle (2) zugewandten Seite eine Stufe (13a) aufweist, und wobei die Stufe (13a) einen größeren Innendurchmesser (13c) als die Öffnung (20) der Rahmenschnittstelle (2) aufweist.

13. Fahrzeug, insbesondere mit Muskelkraft und/oder Motorkraft betreibbares Zweirad, vorzugsweise Elektrofahrrad, umfassend eine Verschraubungsanordnung (1) nach einem der vorhergehenden Ansprüche.

14. Fahrzeug nach Anspruch 13, umfassend einen Fahrzeugrahmen (105), wobei die Rahmenschnittstelle (2) der Verschraubungsanordnung (1) integraler Bestandteil des Fahrzeugrahmens (105) ist, oder wobei die Rahmenschnittstelle (2) der Verschraubungsanordnung (10) mit dem Fahrzeugrahmen (105) verschraubt ist.

15. Verfahren zur Montage einer Antriebsanordnung (10) eines Fahrzeugs (100), umfassend die Schritte:
- Positionieren einer Antriebseinheit (1) relativ zu einer Rahmenschnittstelle (2) des Fahrzeugs (100) mittels eines Kalibrierwerkzeugs,
- erstmaliges Verschrauben der Antriebseinheit (1) mit der Rahmenschnittstelle (2) mittels einer Schraube (3) mit einer vordefinierten Vorspannkraft (5), derart, dass eine vordefinierte Oberflächenstruktur (4) der Antriebseinheit (1) und/oder der Rahmenschnittstelle (2) und/oder der Schraube (3) durch die Vorspannkraft (5) einen Bereich (6) des angrenzenden Elements (1, 2, 3) plastisch verformt, wobei der plastisch verformte Bereich die relative Position der Antriebseinheit und der Rahmenschnittstelle zueinander definiert,
- Lösen der Verschraubung,
- Positionieren der Antriebseinheit (1) relativ zum Fahrzeugrahmen (105) mittels der Oberflächenstruktur (4) und dem plastisch verformten Bereich (6), und
- erneutes Verschrauben der Antriebseinheit (1) mit der Rahmenschnittstelle (2) mittels der Schraube (3).

## Claims

1. Drive arrangement of a vehicle (100) which is operable in particular by muscle power and/or motor power, comprising:
- a drive unit (1),
- a frame interface (2), and
- a screw (3),
wherein the drive unit (1) and the frame interface (2) are screwed together by means of the screw (3) along a screw axis (30), and wherein the drive unit (1) and/or the frame interface (2) and/or the screw (3) have/has a predefined surface structure (4) which is configured so as to plastically deform a region (6) of the adjacent element (1, 2, 3) by way of at least one predefined preload force (5) during a first-time screw connection, **characterized in that** this is realized in such a way that the surface structure (4) and the plastically deformed region (6) form a form fit in a plane (35) perpendicular to the screw axis (30), and wherein the plastically deformed region defines the relative position of the drive unit and the frame interface to one another.

2. Screw-connection arrangement according to Claim 1, wherein the region (6) to be deformed plastically has a lower hardness than the surface structure (4).

3. Screw-connection arrangement according to either of the preceding claims, wherein the surface structure (4) has an annular cutting edge (41) which is formed concentrically in relation to the screw axis (30).

4. Screw-connection arrangement according to Claim 3, wherein the annular cutting edge (41) has a toothing (42) in a circumferential direction.

5. Screw-connection arrangement according to Claim 4, wherein the toothing (42) is of symmetrical form in a radial section.

6. Screw-connection arrangement according to Claim 4, wherein the toothing (42) is in the form of a sawtooth profile.

7. Screw-connection arrangement according to one of the preceding claims, wherein the surface structure (4) has at least one impression (45), in particular in the form of a knurling (45a) and/or a dimple (45b).

8. Screw-connection arrangement according to one of the preceding claims, wherein the screw (3) has a screw head (31) and a screw shank (32), and wherein the screw shank (32) has a thickening (32a), in particular one without a thread, directly adjacent to the screw head (31).

9. Screw-connection arrangement according to Claim 8, wherein the frame interface (2) has an opening (20) through which the screw (3) projects, and wherein the opening (20) is at least in part smaller than the thickening (32a) of the screw (3).

10. Screw-connection arrangement according to Claim 9, wherein the frame interface (2) has multiple radial recesses (21) which extend radially outwards from an inner wall (20a) of the opening (20).

11. Screw-connection arrangement according to either of Claims 9 and 10, wherein the opening (20) is in the form of an elongate hole.

12. Screw-connection arrangement according to one of Claims 9 to 11, wherein the drive unit (1) has a screw opening (13) into which the screw (3) is screwed, wherein the screw opening (13) has a step (13a) on a side directed towards the frame interface (2), and wherein the step (13a) has a larger inner diameter (13c) than the opening (20) of the frame interface (2).

13. Vehicle, in particular a two-wheeled vehicle which is operable by muscle power and/or motor power, preferably an electric bicycle, comprising a screw-connection arrangement (1) according to one of the preceding claims.

14. Vehicle according to Claim 13, comprising a vehicle frame (105), wherein the frame interface (2) of the screw-connection arrangement (1) is an integral constituent part of the vehicle frame (105), or wherein the frame interface (2) of the screw-connection arrangement (10) is screwed to the vehicle frame (105).

15. Method for assembling a drive arrangement (10) of a vehicle (100), comprising the steps of:
- positioning a drive unit (1) relative to a frame interface (2) of the vehicle (100) by means of a calibration tool,
- carrying out a first-time screw connection of the drive unit (1) to the frame interface (2) by means of a screw (3) under a predefined preload force (5) in such a way that a predefined surface structure (4) of the drive unit (1) and/or of the frame interface (2) and/or of the screw (3) plastically deforms, by way of the preload force (5), a region (6) of the adjacent element (1, 2, 3), wherein the plastically deformed region defines the relative position of the drive unit and the frame interface to one another,
- releasing the screw connection,
- positioning the drive unit (1) relative to the vehicle frame (105) by means of the surface structure (4) and the plastically deformed region (6), and
- screwing the drive unit (1) to the frame interface (2) by means of the screw (3) again.

## Revendications

1. Agencement d'entraînement d'un véhicule (100) pouvant fonctionner en particulier à l'aide d'une force musculaire et/ou d'une puissance motrice, comprenant :
- une unité d'entraînement (1),
- une interface de cadre (2), et
- une vis (3),
l'unité d'entraînement (1) et l'interface de cadre (2) étant vissées l'une à l'autre le long d'un axe de vis (30) au moyen de la vis (3), et l'unité d'entraînement (1) et/ou l'interface de cadre (2) et/ou la vis (3) ayant une structure de surface prédéfinie (4) qui est conçue, lors d'un vissage initial avec au moins une force de précontrainte prédéfinie (5), pour déformer plastiquement une zone (6) de l'élément voisin (1, 2, 3), **caractérisé en ce que** la structure de surface (4) et la zone plastiquement déformée (6) forment un ajustement par complémentarité de forme dans un plan (35) perpendiculaire à l'axe de vis (30), la zone plastiquement déformée définissant la position relative de l'unité d'entraînement et de l'interface de cadre l'une par rapport à l'autre.

2. Agencement de vissage selon la revendication 1, dans lequel la zone (6) à déformer plastiquement présente une dureté inférieure à celle de la structure de surface (4).

3. Agencement de vissage selon l'une des revendications précédentes, dans lequel la structure de surface (4) présente un tranchant annulaire (41) qui est réalisé concentriquement par rapport à l'axe de vis (30).

4. Agencement de vissage selon la revendication 3, dans lequel le tranchant annulaire (41) présente une denture (42) dans la direction périphérique.

5. Agencement de vissage selon la revendication 4, dans lequel la denture (42) est réalisée symétriquement en coupe radiale.

6. Agencement de vissage selon la revendication 4, dans lequel la denture (42) est réalisée sous la forme d'un profil en dents de scie.

7. Agencement de vissage selon l'une des revendications précédentes, dans lequel la structure de surface (4) présente au moins une empreinte (45), en particulier sous la forme d'un moletage (45a) et/ou d'un creux (45b).

8. Agencement de vissage selon l'une des revendications précédentes, dans lequel la vis (3) présente une tête de vis (31) et une tige de vis (32), et dans lequel la tige de vis (32) présente un épaississement (32a), en particulier sans filetage, directement adjacent à la tête de vis (31).

9. Agencement de vissage selon la revendication 8, dans lequel l'interface de cadre (2) présente une ouverture (20) à travers laquelle la vis (3) fait saillie, et dans lequel l'ouverture (20) est au moins partiellement plus petite que l'épaississement (32a) de la vis (3).

10. Agencement de vissage selon la revendication 9, dans lequel l'interface de cadre (2) présente plusieurs évidements radiaux (21) qui s'étendent radialement vers l'extérieur à partir d'une paroi intérieure (20a) de l'ouverture (20).

11. Agencement de vissage selon l'une des revendications 9 ou 10, dans lequel l'ouverture (20) est réalisée sous la forme d'un trou oblong.

12. Agencement de vissage selon l'une des revendications 9 à 11, dans lequel l'unité d'entraînement (1) présente une ouverture de vissage (13) dans laquelle la vis (3) est vissée, l'ouverture de vissage (13) présentant un gradin (13a) sur un côté tourné vers l'interface de cadre (2), et dans lequel le gradin (13a) a un diamètre interne (13c) plus grand que l'ouverture (20) de l'interface de cadre (2).

13. Véhicule, en particulier véhicule pouvant fonctionner à l'aide d'une force musculaire et/ou d'une puissance motrice, de préférence bicyclette électrique, comprenant un agencement de vissage (1) selon l'une des revendications précédentes.

14. Véhicule selon la revendication 13, comprenant un cadre de véhicule (105), dans lequel l'interface de cadre (2) de l'agencement de vissage (1) fait partie intégrante du cadre de véhicule (105), ou dans lequel l'interface de cadre (2) de l'agencement de vissage (10) est vissée au cadre de véhicule (105).

15. Procédé de montage d'un agencement de vissage (10) d'un véhicule (100), comprenant les étapes suivantes :
- positionnement d'une unité d'entraînement (1) par rapport à une interface de cadre (2) du véhicule (100) au moyen d'un outil de calibrage,
- vissage initial de l'unité d'entraînement (1) sur l'interface de cadre (2) au moyen d'une vis (3) avec une force de précontrainte prédéfinie (5), de telle sorte qu'une structure de surface prédéfinie (4) de l'unité d'entraînement (1) et/ou de l'interface de cadre (2) et/ou de la vis (3) déforme plastiquement une zone (6) de l'élément voisin (1, 2, 3) à l'aide de la force de précontrainte (5), la zone plastiquement déformée définissant la position relative de l'unité d'entraînement et de l'interface de cadre l'une par rapport à l'autre,
- desserrage du vissage,
- positionnement de l'unité d'entraînement (1) par rapport au cadre de véhicule (105) au moyen de la structure de surface (4) et de la zone plastiquement déformée (6), et
- repositionnement de l'unité d'entraînement (1) sur l'interface de cadre (2) au moyen de la vis (3).
